# EUROPEAN PATENT SPECIFICATION

(11) **EP 3 016 233 B1**
(45) Date of publication and mention of the grant of the patent: **13.06.2018**
(21) Application number: 13887865.7
(22) Date of filing: 24.06.2013
(51) Int. Cl.: H02J 7/00, A24F 47/00

(54) **USB CHARGER CAPABLE OF DISPLAYING ELECTRIC QUANTITY OF BATTERY ROD, AND ELECTRIC QUANTITY DISPLAY METHOD THEREOF**
USB-LADEVORRICHTUNG ZUR ANZEIGE DER ELEKTRISCHEN GRÖSSE EINES BATTERIESTABS UND VERFAHREN ZUR ANZEIGE ELEKTRISCHER GRÖSSEN DAFÜR
CHARGEUR USB CAPABLE D'AFFICHER LA QUANTITÉ D'ÉLECTRICITÉ D'UNE BATTERIE EN TIGE ET SON PROCÉDÉ D'AFFICHAGE DE LA QUANTITÉ D'ÉLECTRICITÉ

(43) Date of publication of application: 04.05.2016
(73) Proprietor: Huizhou Kimree Technology Co., Ltd. Shenzhen Branch, Guangdong 518000 (CN)
(72) Inventor: XIANG, Zhiyong, Changan Town Dongguan, Guangdong 52300 (CN)
(74) Representative: Jordan, Volker Otto Wilhelm
(86) International application number: PCT/CN2013/077771
(87) International publication number: WO 2014/205625

(56) References cited:
- EP-A2- 2 267 863
- CN-A- 102 255 365
- CN-A- 102 940 313
- CN-U- 201 499 600
- CN-U- 202 444 299
- CN-U- 202 998 409
- US-A1- 2005 134 224
- US-A1- 2008 174 269
- US-A1- 2012 249 071
- US-A1- 2013 043 827

## Description

### TECHNICAL FIELD

The invention relates to a charger for an electronic cigarette, and more particularly relates to a USB charger with electric quantity display of a charging battery and a method for electric quantity display of the charging battery in the electronic cigarette.

### BACKGROUND

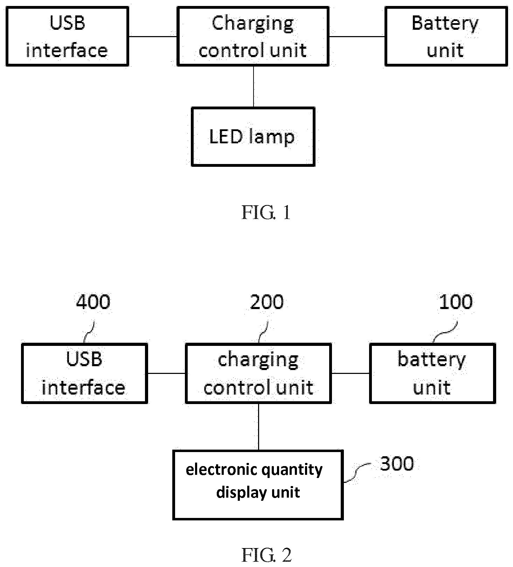

FIG. 1 is a structure schematic of the existing technology of a USB charger which only has charging indicator without electric quantity display.

Currently most of USB chargers for batteries in electronic cigarettes only have charging state indication of "charging" or "full" displayed by monochrome or color LED lamps, some USB chargers even have not charging state indication. Therefore user does not know electric quantity of the charging battery, it will cause inconvenience to user.

For example if an user smokes when the battery in the electronic cigarette has only been charged 10% electric quantity, may be after a few inhalation of smoke, the electronic cigarette run out electricity and does not work, it causes inconvenience to the user.

Each of the documents US 2013/0043827 A1 and EP 2 267 863 A2 discloses the preambles of the independent claims.

Document US 2008/0174269 A1 discloses a battery charger having an integrated battery charge indicator that is readily visible when a battery pack is connected for charging; wherein the battery charge indicator is on a visible outer surface of the housing of the battery charger to indicate a state of charge of the battery pack; wherein the indicator may include a series of light emitting diodes with one LED that is illuminated when the battery pack is charging and will flash if something is wrong with the battery pack; wherein the housing can preferably accommodate more than one configuration of battery packs with the indicator being visible when various battery packs are attached for recharging.

Document US 2005/0134224 A1 discloses a charger capable of displaying quantity of charge of a rechargeable battery; wherein the charger is to employ a charge device that can provide external power for power conversion so as to charge the rechargeable battery; wherein after the charging operation, a display signal is outputted; wherein a display unit is provided on the charge device for receiving the display signal; wherein after the rechargeable battery has been charged on the charge device, through the display unit, the display signal will provide multiple percentage levels for electricity quantity and display an actual quantity of charge that has been charged to the rechargeable battery; thus, a complete quantity of charge can be obtained instantly and precisely, and the user can judge how long and how far the rechargeable battery can last according to the information.

Therefore the defects of existing art need to be improved.

It is an object of the present invention to provide a USB charger and a method for electric quantity display of a USB charger with electric quantity display of battery being charged for measuring directly or indirectly a voltage of a battery inside the battery unit.

This object is being solved according to the invention by a USB charger according to claim 1 and a method according to claim 13. Preferred embodiments of the invention are described in the dependent claims.

### SUMMARY OF THE INVENTION

To resolve the technical problem for the electric quantity of the charging battery cannot be displayed, a USB charger with electric quantity display of a charging battery and method of electric quantity display are provided.

A USB charger with electric quantity display for battery being charged comprising:
a USB interface;
a battery unit;
a charging control unit; and
an electric quantity display unit.

The charging control unit is separately connected to the USB interface, the battery unit and the electric quantity display unit.

The charging control unit controls an external power supply charging a battery in the battery unit through the USB interface, tests voltage of the battery being charged directly or indirectly, and further controls the electric quantity display unit to show updated electric quantity of the battery being charged in real time.

In the USB charger with electric quantity display for battery being charged according to an aspect of the invention, when the voltage of the battery being charged is measured directly, the charging control unit includes: a micro controller, a charging management circuit and a sampling voltage circuit, the battery unit includes the battery.

The USB interface is connected to the charging management circuit separately connected to the battery and the sampling voltage circuit, the sampling voltage circuit is connected to the micro controller separately connected to the charging management circuit and the electric quantity display unit.

Wherein, the micro controller controls the charging management circuit outputting charging voltage to the battery, the sampling voltage circuit detecting the voltage of the battery being charged, and the electric quantity display unit showing electric quantity of the battery being charged.

In the USB charger with electric quantity display for battery being charged according to an aspect of the invention, when the voltage of the battery is measured indirectly, the charging control unit includes: a micro controller, an adjustable output DC-DC circuit, a sampling voltage circuit and a sampling current circuit, the battery unit includes a battery and a linear charging management circuit.

The USB interface is connected to the adjustable output DC-DC circuit separately connected to the linear charging management circuit and the sampling voltage circuit, the linear charging management circuit is connected to the battery connected to the sampling current circuit, the micro controller is separately connected to the sampling voltage circuit, the sampling current circuit, the adjustable output DC-DC unit and the electric quantity display unit.

Wherein, the micro controller controls: the sampling current circuit detecting actual charging current of the battery, the adjustable output DC-DC circuit outputting charging voltage to the battery unit to have the actual charging current of the battery equal to or slightly less than a preset constant charging current of the battery, the sampling voltage circuit detecting the charging voltage to the battery unit, and the electric quantity display unit showing electric quantity of the charging battery.

In the USB charger with electric quantity display for battery being charged according to an aspect of the invention, wherein the electric quantity display unit includes LED lamp and/or LCD screen.

In the USB charger with electric quantity display for battery being charged according to an aspect of the invention, the electric quantity is a charged level of the battery being charged, the electric quantity display unit includes at least 2 LED light indicating the charged level.

In the USB charger with electric quantity display for battery being charged according to an aspect of the invention, the electric quantity includes percentage of full electric quantity of the battery being charged and spent charging time and/or surplus charging time, the electric quantity display unit includes at least one LCD screen indicating the electric quantity.

In the USB charger with electric quantity display for battery being charged according to an aspect of the invention, the charging management circuit includes a charging control chip, a first capacitor and a first resistance, the charging control chip is connected to the USB interface via the first resistor, the charging control chip is also connected to one end of the first capacitor and the positive of the battery, the other end of the first capacitor is connected to the negative of the battery.

In the USB charger with electric quantity display for battery being charged according to an aspect of the invention, type of the charging control chip is VA7204, type of the micro controller is SN8P2712.

In the USB charger with electric quantity display for battery being charged according to an aspect of the invention, the sampling voltage circuit includes a first divider resistor and a second divider resistor, one end of the first divider resistor is connected to the positive of the battery, the other end of first divider resistor is connected to one end of the second divider resistor and PWM2 pin of the micro controller, the other end of the second divider resistor is grounded.

In the USB charger with electric quantity display for battery being charged according to an aspect of the invention, type of the micro controller is SN8P2712.

In the USB charger with electric quantity display for battery being charged according to an aspect of the invention, the adjustable output DC-DC circuit includes a MOSFET, a first capacitor, a first fast recovery diode, a first resistor and a second resistor, the source of the MOSFET is connected to the negative of the first fast recovery diode, the positive of the first fast recovery diode is connected to the USB interface via the first resistance; the gate of the NOSFET is connected to pin PWM0 of the micro controller via the second resistance; the drain of the MOSFET is connected to one end of the first capacitor and the linear charging management circuit, the other end of the first capacitor is connected to the negative of the battery. In the USB charger with electric quantity display for battery being charged according to an aspect of the invention, the MOSFET is P-channel and type of the MOSFET is AO3401.

In the USB charger with electric quantity display for battery being charged according to an aspect of the invention, the sampling voltage circuit includes a first divider resistor and a second divider resistor, one end of the first divider resistor is connected to one end of the first capacitor, the other end of first divider resistor is connected to one end of the second divider resistor and pin PWM2 of the micro controller, the other end of the second divider resistor is grounded.

In the USB charger with electric quantity display for battery being charged according to an aspect of the invention, the sampling current circuit includes a sampling current resistor which is separately connected to pin PWM1 of the micro controller and the negative of the battery.

According to an aspect of the invention, there is also disclosed a method for electric quantity display of USB charger with electric quantity display of battery being charged, a charging control unit controls external power supply charging the battery in a battery unit, directly or indirectly tests voltage of the battery being charged in the battery unit, and further controls an electric quantity display unit showing electric quantity of the battery being charged.

In the method for electric quantity display of USB charger with electric quantity display of battery being charged according to an aspect of the invention, when directly testing a voltage of the charging battery, a micro controller controls: a charging management circuit outputting charging voltage to the battery, a sampling voltage circuit detecting voltage of the battery being charged, and the electric quantity display unit showing the electric quantity of the battery being charged.

In the method for electric quantity display of USB charger with electric quantity display of battery being charged according to an aspect of the invention, when indirectly testing the voltage of the battery being charged, the micro controller controls: a sampling current circuit detecting actual charging current of the battery, an adjustable output DC-DC circuit outputting charging voltage to the battery unit to have the actual charging current of the battery equal to or slightly less than a preset constant charging current of the battery, and the sampling voltage circuit detecting the charging voltage to the battery unit.

The voltage of the battery being charged is equal to that the charging voltage to the battery unit minus a preset difference. The micro controller further controls the electric quantity display unit showing electric quantity of the battery being charged.

In the method for electric quantity display of USB charger with electric quantity display of battery being charged according to an aspect of the invention, the electric quantity may be showed by way of columnar and/or fan-shaped and / or percentage.

Implementation of the USB charger and the method of the invention, following advantages can be achieved by controlling external power supply charging the battery in battery unit, directly or indirectly testing the voltage of the charging battery and showing updated electric quantity, user can know charging level of the battery.

### BRIEF DESCRIPTION OF THE DRAWINGS

A more complete understanding of the invention may be derived by referring the detailed description when considered in connection with the figures, and in the accompanying drawings:
FIG. 1 illustrates a schematic diagram of a prior art USB charger having charging indication without electric quantity display of a battery being charged;
FIG. 2 illustrates a schematic block diagram of a USB charger with electric quantity display of the battery being charged according to the invention;
FIG. 3 illustrates a schematic block diagram of the USB charger with electric quantity display of the battery being charged according to a first embodiment showing aspects of the invention;
FIG. 4 illustrates a schematic circuit diagram of the USB charger with electric quantity display of the battery being charged according to the first embodiment showing aspects of the invention;
FIG. 5 illustrates a schematic block diagram of the USB charger with electric quantity display of the battery being charged according to a second embodiment showing aspects of the invention; and
FIG. 6 illustrates a schematic circuit diagram of the USB charger with electric quantity display of the battery being charged according to a first mode of the second embodiment showing aspects of the invention.

### DETAIL DESCRIPTION OF THE INVENTION

FIG. 2 is a schematic block diagram of a USB charger with electric quantity display of the battery being charged according to the invention. In FIG. 2, the USB charger includes the battery unit 100, the charging control unit 200, the electric quantity display unit 300, and the USB interface 400, the charging control unit 200 is separately connected to the USB interface 400, the battery unit 100 and the electric quantity display 300.

The charging control unit 200 controls external power supplies through the USB interface 400 charging a battery in battery unit 100, directly or indirectly testing a voltage of the charging battery and further controls the electric quantity display unit 300 showing updated electric quantity of the charging battery in real time.

The electric quantity display unit 300 includes LED lamp and/or LCD screen.

When the electric quantity display unit 300 only includes LED lamp, at least 2 LED lights is configured to show a charged level of the charging battery.

When the electric quantity display unit 300 only includes LCD screen, at least one LCD screen is configured to show percentage of full electric quantity of the charging battery and spent charging time and/or surplus charging time.

When the electric quantity display unit includes both LED light and LCD screen, at least 2 LED lights is configured to show a charged level of the charging battery and at least one LCD screen is configured to show percentage of full electric quantity of the charging battery and spent charging time and/or surplus charging time.

The charged level may be divided into several grades, the number of grades must be an integer which equal to the number of LED lamps of the electric quantity display unit 300, each grade corresponds to a certain voltage range of the charging battery and a certain number of LED lamps. For example if the voltage of the charging battery is in N grade, so N LED lamps shall emit to show the charged lever.

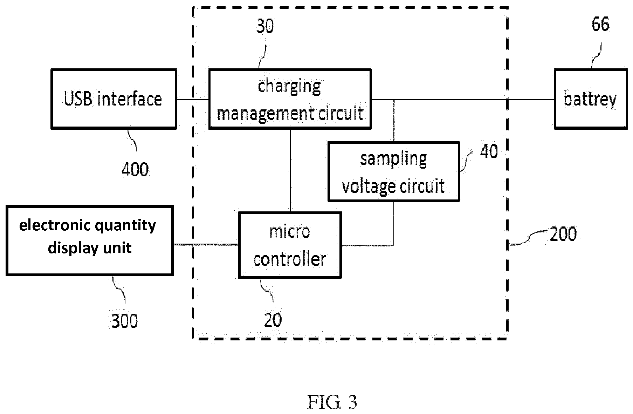

FIG. 3 is a schematic block diagram of the USB charger with electric quantity display of the battery being charged according to a first embodiment showing aspects of the invention. In FIG. 3, a battery unit of an electronic cigarette has not charging management circuit inside, the USB charger with a charging management circuit charges a battery in the battery unit, so the charging voltage from the USB charger to the battery unit is equal to the voltage of the charging battery of the battery unit, a micro controller can get electric quantity of the charging battery from the voltage of the charging battery.

Specifically, in the first embodiment, the battery unit 100 only includes the battery 66; the charging control unit 200 includes the micro controller 20, the charging management circuit 30, and the sampling voltage circuit 40.

The USB interface 400 is connected to the charging management circuit 30 connected to the battery 66 and the sampling voltage circuit 40, and the micro controller 20 is separately connected to the sampling voltage 40, the charging management circuit 30 and the electric quantity display unit 400.

The micro controller 20 controls the charging management circuit 30 outputting charging voltage to the battery 66, the sampling voltage circuit 40 detecting voltage of the battery 66 being charged, the electric quantity display unit 400 showing electric quantity of the battery 66 being charged.

The electric quantity display unit 300 is configured as LED lamps, and the electric quantity is showed by charged level.

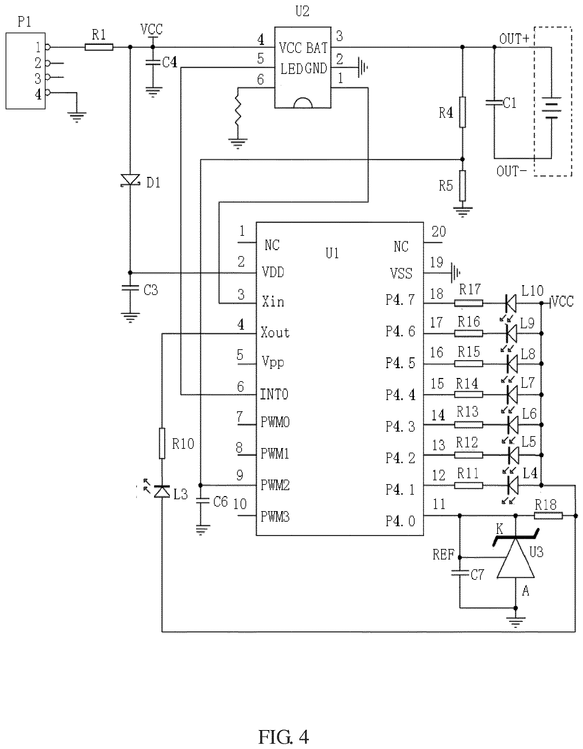

FIG. 4 is a schematic circuit diagram of the USB charger with electric quantity display of the battery being charged according to the first embodiment showing aspects of the invention. In FIG. 4, the charging management circuit 30 includes a control chip U2, a first capacitor cl, a first resistor R1, type of U2 is VA7204.

Pin 4 of the USB interface P1 is grounded, pin 1 of the USB interface P1 is connected to one end of the capacitor C4 and pin 4 (VCC of test terminal) of the control chip U2 via the first resistor R1, the other end of the capacitor C4 is grounded.

Type of the micro controller U1 is SN8P2712, VDD pin of the micro controller U1 is connected to the negative of the fast recovery diode D1, the positive of the fast recovery diode D1 is connected to the VCC of test terminal, VDD pin of the micro controller U1 is grounded via the capacitor C3, VSS pin of the micro controller U1 is grounded, p4.0 pin of the micro controller U1 is connected to the capacitor C7, the resistor R18 and the adjustable precision shunt regulators U3, type of the U3 is CJ431. BAT pin of the control chip U2 is connected to one end of the first capacitor C1 and the positive of the battery 66, i.e. OUT+ terminal of the battery unit 100, the other end of the first capacitor C1 is connected to the negative of the battery 66, i.e. OUT- terminal of the battery unit 100, INTO pin of the micro controller U1 is connected to LED pin of the control chip U2.

The electric quantity display unit 300 includes eight blue LED lamps of L3 to L10 indicating the charged level.

Pins of p4.1 to p4.7 of the micro controller U2 are separately connected to the negatives of the blue LED lamps of L4 to L10 separately via the resistances of R11 to R17. Pin Xout of the micro controller U1 is connected to the negative of the blue LED lamp L3 via the resistance R10. The positives of the blue LED lamps L3-L10 are all connected to the VCC of test terminal. Each resistance value of the R10 to R17 is same as 2KΩ.

The sampling voltage circuit 40 includes the first divider resistance R4 and the second divider resistance R5. One end of the first divider resistance R4 is connected to the positive i.e. OUT+ of the battery unit 100, the other end of the first divider resister R4 is connected to one end of the second divider resistance R5 and pin PWM2 of the micro controller U1, the other end of the second divider resistance R5 is grounded. Pin PWM2 of the micro controller U1 is grounded via the capacitor C6. The resistance value of the first divider resistance R4 is 10 KΩ and is same as the resistance value of the second divider resistance R5.

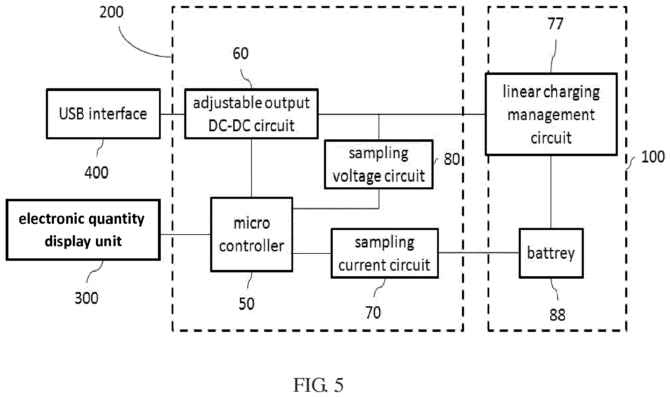

FIG. 5 is a schematic block diagram of the USB charger with electric quantity display of the battery being charged according to a second embodiment showing aspects of the invention. In FIG. 5, the battery pole of an electric cigarette, i.e. the battery unit 100, has the linear charging management circuit 77 inside, so only a fixed 5V voltage is needed to supply to the battery unit 100, but the voltage of the battery 88 being charged in the battery unit 100 can not be detected directly. The voltage of the batter 88 being charged can be got by following steps: controlling the adjusting output DC-DC circuit 212 outputting a charging voltage to the battery unit 100 to have the charging current through the battery 88 equal to or slight then a preset constant charging current of the battery 88, in this conditions, the voltage of the battery 88 being charged is equal to that the charging voltage to battery unit 100 minus a preset difference. In this embodiment, the preset difference is 0.2 -0.5V, the preferred 0.2V Further the electric quantity of the battery 88 is calculated.

Specifically the battery unit 100 includes the linear charging management circuit 77 and the battery 88, they are connected electrically.

The charging control unit 200 includes the micro controller 50, adjustable output DC-DC circuit 60, the sampling voltage circuit 80 and the sampling current circuit 70.

The USB interface 400 is connected to the adjustable output DC-DC circuit 60 connected to the linear charging management circuit 77 and the sampling voltage circuit 80. The sampling voltage circuit 80 is connected to the micro controller 50 connected to the sampling current circuit 70, the electric quantity display unit 300 and the adjustable output DC-DC circuit 60. The linear charging management circuit 77 is connected to the battery 88 connected to the sampling current circuit 70.

The sampling current circuit 70 is used for detecting an actual charging current to the battery 88, the micro controller 50 compares the actual charging current with the preset constant charging current of the battery 88 and then controls the adjustable output DC-DC circuit 66 outputting an adjusted charging voltage to the battery unit 100 to make that the actual charging current to the battery 88 is equal to or slight then the preset constant charging current of the battery 88. The sampling voltage circuit 80 detects the charging voltage to battery unit 100, and transmits it to the micro controller 50, the micro controller 50 can calculate out the voltage of the battery 88 being charged, which is equal to that the charging voltage to the battery unit 100 minus a preset difference. Further the electric quantity of the battery 88 being charged can be showed.

In the second embodiment, the electric quantity display unit 300 is configured as LED lamps; the electric quantity of the charging battery is showed by charged level.

The second embodiment has two modes of execution.

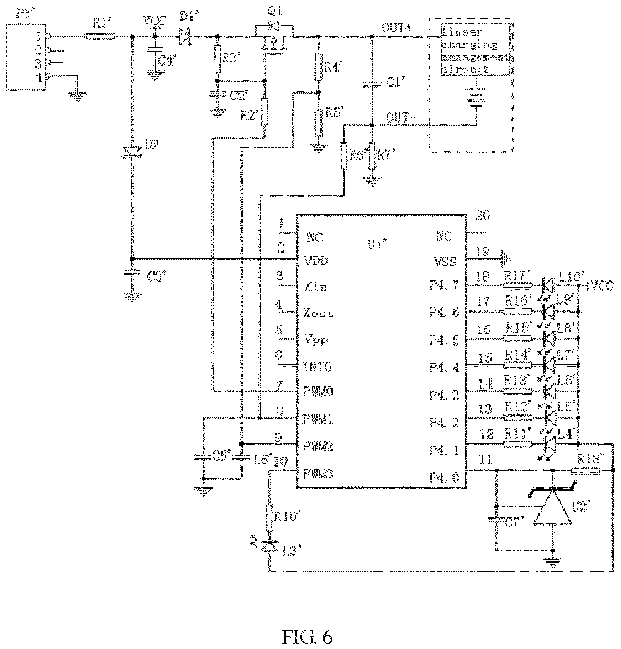

FIG. 6 is a schematic circuit diagram of the USB charger with electric quantity display of the battery being charged according to a first mode of the second embodiment showing aspects of the invention. In FIG.6, the adjustable output DC-DC circuit 60 includes: a MOSFET Q1, a fist capacitor C1', a fist recovery diode D1', a first resistance R1' and a second resistance R2'.

Pin 4 of the USB PI' interface is grounded, pin1 of the USB P1' interface is connected to the VCC of test terminal and one end of the capacitor C4' via the first resistance R1', and the other end of the capacitor C4' is grounded.

Type of the micro controller U1' is SN8P2712, pin VDD of the micro controller U1' is connected to the negative of the fast recovery diode D2 and is connected to ground via the capacitor C3', the positive of the fast recovery diode D2 is connected to the VCC of test terminal, pin VSS of the micro controller U1' is grounded, and pin P4.0 of the micro controller U1' is connected to the capacitor C7', the resistance R18', and the adjustable precision shunt regulators U2' of type CJ 431.

The source of the MOSFET Q1 is connected to the negative of the first fast recovery diode D1' and is connected to one end of the capacitor C2' and the gate of the MOSFET Q1 via the resistance R3'. The other end of the capacitor C2' is grounded, the positive of the first fast recovery diode D1' is connected to the VCC of test terminal; the gate of the MOSFET Q1 is connected to pin PWM0 of micro controller U1' via the second resistance R2'; the drain of the MOSFET Q1 is connected to one end of the first capacitor C1' and the linear charging management circuit 77 and the OUT+ terminal of the battery unit 100, the other end of the first C1' is connected to the negative of the battery 88 and the OUT-terminal of the battery unit 100. The OUT+ and OUT- terminals is configured as the positive and negative of the battery unit 100 when outputting power supply to external.

Pin PWM0 of the micro controller U1' is used to output adjustable PWM signal to control the MOSFET Q1 turn-on and turn-off, and further control charging time of the first capacitor C1' to achieve real-time adjustment of the charging voltage objective.

Type of MOSFET Q1 is AQ3401, P channel. Types of all referred fast recovery diodes are same as SS14.

The electric quantity display unit 300 includes eight blue LED lamps L3' to L10' indicating the charged level of the charging battery.

Pins of p4.1 to p4.7 of the micro controller U1' are separately connected to the negatives of the blue LED lamps of L4' to L10' via the resistances of R11' to R17'. Pin PWM3 of the micro controller U1' is connected to the negative of the blue LED lamp L3 via the resistance R10'. The positives of the blue LED lamps L3'-L10' are all connected to the VCC of test terminal. Each resistance value of the R10' to R17' is same as 2KΩ.

The sampling voltage circuit 80 includes the first divider resistance R4' and the second divider resistance R5', one end of the first divider resistance R4' is connected to one end of the first capacitor C1' and OUT+ terminal of the battery unit 100, the other end of the first divider resister R4' is connected to one end of the second divider resistance R5' and pin PWM2 of the micro controller U1' the other end of the second divider resistance R5 is grounded. Pin PWM2 of the micro controller U1 is grounded via the capacitor C6'. The resistance value of the first divider resistance R4' is 10kΩ as same as the second divider resistance R5'.

The sampling current circuit 70 includes a sampling current resistance R6' with resistance value of 1 kΩ. One end of the sampling current resistance R6' is connected to pin PWM1 of the micro controller U1', the other end of the sampling current resistance R6' is connected to the negative of the battery 88 and the OUT- terminal of the battery unit 100. One end of the resistance R7' is connected to the OUT- terminal of the battery unit 100, the other end of the resistance R7' is grounded. Pin PWM1 of the micro controller U1' is grounded via the capacitor C5.

In a second mode of the second embodiment showing aspects of the invention, the adjustable output DC-DC circuit 60 includes a digital potentiometer and DC-DC output circuit. The digital potentiometer is used to adjust the resistance value of a feedback resistance of the DC-DC output circuit, and make the DC-DC output circuit adjust a charging voltage to the battery unit 100. This technology of the digital potentiometer is well known in the field, here don't do detailed.

There is provided an electric quantity display method for a USB charger with electric quantity display of a charging battery according to an aspect of the invention. The method is that: the charging control unit 200 controls external power supply charging a battery in the battery unit 100, directly or indirectly tests voltage of the battery being charged in battery unit 100, and further controls the electric quantity display unit 300 showing electric quantity of the battery being charged.
when directly tests voltage of the battery being charged, the micro controller 20 controls: the charging management circuit 30 outputting charging voltage to the battery 66, the sampling voltage circuit 40 detecting voltage of the battery 66 being charged, and the electric quantity display unit 300 showing the electric quantity of the battery 66 being charged.

When indirectly tests voltage of the battery being charged, the micro controller 50 controls: the sampling current circuit 70 detecting actual charging current of the battery 88, the adjustable output DC-DC circuit 60 outputting charging voltage to the battery unit 100 to have the actual charging current of the battery 88 equal to or slightly less than a preset constant charging current of the battery 88, and the sampling voltage circuit 80 detecting the charging voltage to the battery unit 100.

The voltage of the battery being charged is equal to that the charging voltage to the battery unit 100 minus a preset difference. The micro controller further controls the electric quantity display unit 300 showing electric quantity of the battery 88 being charged.

The electric quantity may be showed by way of columnar and/or fan-shaped and / or percentage.

The voltage sampling frequency is one time per second.

The electric quantity display further includes:
The electric quantity of the battery being charged may be divided into N grades, full charged level of the battery being charged is corresponding to the N grade, a charged level of the battery being charged is corresponding to a number of lattices of the column or fan-shaped display.

While the invention has been described by way of example and in terms of preferred embodiment, it is to be understood that the invention is not limited thereto. Those who are skill in this technology can still make various alterations and modifications without departing from the scope of the invention. Therefore, the scope of the present invention shall be defined and protected by the following claims.

## Claims

1. A USB charger with electric quantity display for battery being charged, comprising:
a USB interface (400);
a battery unit (100); and
a charging control unit (200);
wherein the USB charger further comprises an electric quantity display unit (300);
**characterized in that** the charging control unit (200) is separately connected to the USB interface (400), the battery unit (100) and the electric quantity display unit (300);
the charging control unit (200) controls an external power supply charging a battery in the battery unit (100) through the USB interface (400), tests voltage of the battery being charged directly or indirectly, and further controls the electric quantity display unit (300) to show updated electric quantity of the battery being charged in real time;
when the voltage of the battery being charged is tested directly, the charging control unit (200) includes: a micro controller (20), a charging management circuit (30) and a sampling voltage circuit (40), and the battery unit (100) includes the battery (66);
the USB interface (400) is connected to the charging management circuit (30) separately connected to the battery (66) and the sampling voltage circuit (40), the sampling voltage circuit (40) is connected to the micro controller (20) separately connected to the charging management circuit (30) and the electric quantity display unit (300); and
the micro controller (20) controls the charging management circuit (30) outputting charging voltage to the battery (66), the micro controller (20) further controls the sampling voltage circuit (40) detecting the voltage of the battery (66) being charged, and the electric quantity display unit (300) showing electric quantity of the battery being charged;
when the voltage of the battery is tested indirectly, the charging control unit (200) includes: a micro controller (50), an adjustable output DC-DC circuit (60), a sampling voltage circuit (80) and a sampling current circuit (70), the battery unit (100) includes a battery (88) and a linear charging management circuit (77);
the USB interface (400) is connected to the adjustable output DC-DC circuit (60) separately connected to the linear charging management circuit (77) and the sampling voltage circuit (80), the linear charging management circuit (77) is connected to the battery (88) connected to the sampling current circuit (70), the micro controller (50) is separately connected to the sampling voltage circuit (80), the sampling current circuit (70), the adjustable output DC-DC unit (60) and the electric quantity display unit (300); and
the micro controller (50) is configured to control charging voltage outputted to the battery unit (100) from the adjustable output DC-DC circuit (60), to control the sampling current circuit (70) to detect actual charging current of the battery (88), and further to control the adjustable output DC-DC circuit (60) to output adjusted charging voltage to the battery unit (100) in order to ensure that the actual charging current of the battery is equal to or slightly less than a preset constant charging current of the battery; the micro controller (50) further controls the sampling voltage circuit (80) to detect the adjusted charging voltage, and the electric quantity display unit (300) to show electric quantity.

2. The USB charger with electric quantity display for battery being charged as claimed in claim 1, **characterized in that** the electric quantity display unit includes LED lamp and/or LCD screen.

3. The USB charger with electric quantity display for battery being charged as claimed in claim 1, **characterized in that** the electric quantity is a charged level of the battery being charged, the electric quantity display unit includes at least two LED lamps indicating the charged level.

4. The USB charger with electric quantity display for battery being charged as claimed in claim 1, **characterized in that** the electric quantity includes percentage of full electric quantity of the battery being charged and spent charging time and/or surplus charging time, the electric quantity display unit includes at least one LCD screen indicating the electric quantity.

5. The USB charger with electric quantity display for battery being charged as claimed in claim 1, **characterized in that** when the voltage of the battery being charged is tested directly, the charging management circuit includes a charging control chip (U2), a first capacitor (C1) and a first resistance (R1), the charging control chip (U2) is connected to the USB interface (P1) via the first resistor (R1), the charging control chip (U2) is also connected to one end of the first capacitor (C1) and the positive of the battery (66), the other end of the first capacitor (C1) is connected to the negative of the battery (66).

6. The USB charger with electric quantity display for battery being charged as claimed in claim 5, **characterized in that** when the voltage of the battery being charged is tested directly, type of the charging control chip is VA7204, type of the micro controller is SN8P2712.

7. The USB charger with electric quantity display for battery being charged as claimed in claim 6, **characterized in that** when the voltage of the battery being charged is tested directly, the sampling voltage circuit (40) includes a first divider resistor (R4) and a second divider resistor (R5), one end of the first divider resistor (R4) is connected to the positive of the battery (66), the other end of first divider resistor (R4) is connected to one end of the second divider resistor (R5) and PWM2 pin of the micro controller (U1), the other end of the second divider resistor (R5) is grounded.

8. The USB charger with electric quantity display for battery being charged as claimed in claim 1, **characterized in that** when the voltage of the battery being charged is tested indirectly, type of the micro controller (U1') is SN8P2712.

9. The USB charger with electric quantity display for battery being charged as claimed in claim 8, **characterized in that** when the voltage of the battery being charged is tested indirectly, the adjustable output DC-DC circuit includes a MOSFET (Q1), a first capacitor (C1'), a first fast recovery diode (D1'), a first resistor (R1') and a second resistor (R2');
a source of the MOSFET (Q1) is connected to the negative of the first fast recovery diode (D1'), the positive of the first fast recovery diode (Q1) is connected to the USB interface (P1') via the first resistor (R1');
a gate of the NOSFET (Q1) is connected to pin PWM0 of the micro controller (U1') via the second resistance (R2');
a drain of the MOSFET (Q1) is connected to one end of the first capacitor (C1') and the linear charging management circuit (77), the other end of the first capacitor (C1') is connected to the negative of the battery (88).

10. The USB charger with electric quantity display for battery being charged as claimed in claim 9, **characterized in that** when the voltage of the battery being charged is tested indirectly, the MOSFET (Q1) is P-channel and type of the MOSFET (Q1) is AO3401.

11. The USB charger with electric quantity display for battery being charged as claimed in claim 10, **characterized in that** when the voltage of the battery being charged is tested indirectly, the sampling voltage circuit (80) includes a first divider resistor (R4') and a second divider resistor (R5'), one end of the first divider resistor (R4') is connected to one end of the first capacitor (C1'), the other end of first divider resistor (R4') is connected to one end of the second divider resistor (R5') and pin PWM2 of the micro controller (U1'), the other end of the second divider resistor (R5') is grounded.

12. The USB charger with electric quantity display for battery being charged as claimed in claim 8, **characterized in that** when the voltage of the battery being charged is tested indirectly, the sampling current circuit (70) includes a sampling current resistor (R6') which is separately connected to pin PWM1 of the micro controller (U1') and the negative of the battery (88).

13. A method for electric quantity display of a USB charger with electric quantity display of battery being charged, **characterized in that** a charging control unit (200) controls external power supply to charge the battery in a battery unit (100), directly or indirectly tests voltage of the battery being charged in the battery unit (100), and further controls an electric quantity display unit (300) to show electric quantity of the battery being charged;
when directly testing the voltage of the battery being charged, a micro controller controls (20) charging voltage outputted to the battery (66) from the charging management circuit (30), and further controls a sampling voltage circuit to detect the voltage of the battery (66) being charged, and controls the electric quantity display unit (300) to show the electric quantity;
when indirectly testing voltage of the battery being charged, the micro controller (50) controls charging voltage outputted to the battery unit (100) from an adjustable output DC-DC circuit (60), and controls a sampling current circuit (70) to detect actual charging current of the battery (88), and hence controls the adjustable output DC-DC circuit (60) to output adjusted charging voltage to the battery unit (100) in order to ensure that the actual charging current of the battery is equal to or slightly less than a preset constant charging current of the battery, and then controls the sampling voltage circuit (80) to detect the adjusted charging voltage;
the voltage of the battery (88) being charged is equal to that the charging voltage minus a preset difference; the micro controller further controls the electric quantity display unit (300) to show the electric quantity.

## Patentansprüche

1. USB-Ladegerät mit Anzeige einer elektrischen Größe für eine Batterie, welche geladen wird, umfassend:
eine USB-Schnittstelle (400);
eine Batterieeinheit (100); und
eine Laderegelungs-/Ladesteuerungseinheit (200);
wobei das USB-Ladegerät ferner eine Anzeigeeinheit (300) einer elektrischen Größe umfasst;
**dadurch gekennzeichnet, dass** die Laderegelungs-/Ladesteuerungseinheit (200) separat mit der USB-Schnittstelle (400), der Batterieeinheit (100) und der Anzeigeeinheit (300) einer elektrischen Größe verbunden ist;
die Laderegelungs-/Ladesteuerungseinheit (200) eine externe Leistungszufuhr regelt/steuert, welche eine Batterie in der Batterieeinheit (100) durch die USB-Schnittstelle (400) lädt, eine Spannung der Batterie, welche geladen wird, direkt oder indirekt testet und ferner die Anzeigeeinheit (300) einer elektrischen Größe regelt/steuert, um eine aktualisierte elektrische Größe der Batterie, welche geladen wird, in Echtzeit anzuzeigen;
wenn die Spannung der Batterie, welche geladen wird, direkt getestet wird, die Laderegelungs-/Ladesteuerungseinheit (200) umfasst: einen Mikrocontroller (20), eine Lade-Managementschaltung (30) und eine Abtastspannung-Schaltung (40), und die Batterieeinheit (100) die Batterie (66) umfasst;
die USB-Schnittstelle (400) mit der Lade-Managementschaltung (30) verbunden ist, welche separat mit der Batterie (66) und der Abtastspannung-Schaltung (40) verbunden ist, die Abtastspannung-Schaltung (40) mit dem Mikrocontroller (20) verbunden ist, welcher separat mit der Lade-Managementschaltung (30) und der Anzeigeeinheit (300) einer elektrischen Größe verbunden ist; und
der Mikrocontroller (20) die Lade-Managementschaltung (30) regelt/steuert, welche eine Ladespannung zu der Batterie (66) ausgibt, der Mikrocontroller (20) ferner die Abtastspannung-Schaltung (40), welche die Spannung der Batterie (66), welche geladen wird, detektiert, und die Anzeigeeinheit (300) einer elektrischen Größe, welche die Größe der Batterie, welche geladen wird, anzeigt, regelt/steuert;
wenn die Spannung der Batterie direkt getestet wird, die Laderegelungs-/Ladesteuerungseinheit (200) umfasst: einen Mikrocontroller (50), eine einstellbare Ausgabe-Gleichstrom-Gleichstrom-Schaltung (60), eine Abtastspannung-Schaltung (80) und eine Abtaststrom-Schaltung (70), die Batterieeinheit (100) eine Batterie (88) und eine Linear-Lade-Managementschaltung (77) umfasst;
die USB-Schnittstelle (400) mit der einstellbaren Ausgabe-Gleichstrom-Gleichstrom-Schaltung (60) verbunden ist, welche separat mit der Linear-Lade-Managementschaltung (77) und der Abtastspannung-Schaltung (80) verbunden ist, die Linear-Lade-Managementschaltung (77) mit der Batterie (88) verbunden ist, welche mit der Abtaststrom-Schaltung (70) verbunden ist, der Mikrocontroller (50) separat mit der Abtastspannung-Schaltung (80), der Abtaststrom-Schaltung (70), der einstellbaren Ausgabe-Gleichstrom-Gleichstrom-Einheit (60) und der Anzeigeeinheit (300) einer elektrischen Größe verbunden ist; und
der Mikrocontroller (50) konfiguriert ist, um eine Ladespannung zu regeln/steuern, welche zu der Batterieeinheit (100) von der einstellbaren Ausgabe-Gleichstrom-Gleichstrom-Schaltung (60) ausgegeben wird, um die Abtaststrom-Schaltung (70) zu regeln/steuern, um den gegenwärtigen Ladestrom der Batterie (88) zu detektieren, und ferner, um die einstellbare Ausgabe-Gleichstrom-Gleichstrom-Schaltung (60) zu regeln/steuern, um eine eingestellte Ladespannung zu der Batterieeinheit (100) auszugeben, um sicherzustellen, dass der gegenwärtige Ladestrom der Batterie gleich groß ist wie oder etwas geringer ist als ein voreingestellter konstanter Ladestrom der Batterie; der Mikrocontroller (50) ferner die Abtastspannung-Schaltung (80) regelt/steuert, um die eingestellte Ladespannung zu detektieren, und die Anzeigeeinheit (300) einer elektrischen Größe regelt/steuert, um eine elektrische Größe anzuzeigen.

2. USB-Ladegerät mit Anzeige einer elektrischen Größe für eine Batterie, welche geladen wird, nach Anspruch 1, **dadurch gekennzeichnet, dass** die Anzeigeeinheit einer elektrischen Größe eine LED-Lampe und/oder einen LCD-Schirm umfasst.

3. USB-Ladegerät mit Anzeige einer elektrischen Größe für eine Batterie, welche geladen wird, nach Anspruch 1, **dadurch gekennzeichnet, dass** die elektrische Größe ein Ladeniveau der Batterie ist, welche geladen wird, die Anzeigeeinheit einer elektrischen Größe mindestens zwei LED-Lampen umfasst, welche das Ladeniveau anzeigen.

4. USB-Ladegerät mit Anzeige einer elektrischen Größe für eine Batterie, welche geladen wird, nach Anspruch 1, **dadurch gekennzeichnet, dass** die elektrische Größe einen Prozentsatz einer vollen elektrischen Größe der Batterie, welche geladen wird, und verbrachte Ladezeit und/oder Restladezeit umfasst, die Anzeigeeinheit einer elektrischen Größe mindestens einen LCD-Schirm umfasst, welcher die elektrische Größe anzeigt.

5. USB-Ladegerät mit Anzeige einer elektrischen Größe für eine Batterie, welche geladen wird, nach Anspruch 1, **dadurch gekennzeichnet, dass**, wenn die Spannung der Batterie, welche geladen wird, direkt getestet wird, die Lade-Managementschaltung einen Laderegelungs-/Ladesteuerungschip (U2), einen ersten Kondensator (C1) und einen ersten Widerstand (R1) umfasst, der Laderegelungs-/Ladesteuerungschip (U2) mit der USB-Schnittstell (P1) über den ersten Widerstand (R1) verbunden ist, der Laderegelungs-/Ladesteuerungschip (U2) auch mit einem Ende des ersten Kondensators (C1) und dem Positiven der Batterie (66) verbunden ist, das andere Ende des ersten Kondensators (C1) mit dem Negativen der Batterie (66) verbunden ist.

6. USB-Ladegerät mit Anzeige einer elektrischen Größe für eine Batterie, welche geladen wird, nach Anspruch 5, **dadurch gekennzeichnet, dass**, wenn die Spannung der Batterie, welche geladen wird, direkt getestet wird, ein Typ des Laderegelungs-/Ladesteuerungschips VA7204 ist, ein Typ des Mikrocontrollers SN8P2712 ist.

7. USB-Ladegerät mit Anzeige einer elektrischen Größe für eine Batterie, welche geladen wird, nach Anspruch 6, **dadurch gekennzeichnet, dass**, wenn die Spannung der Batterie, welche geladen wird, direkt getestet wird, die Abtastspannung-Schaltung (40) einen ersten Teiler-Widerstand (R4) und einen zweiten Teiler-Widerstand (R5) umfasst, ein Ende des ersten Teiler-Widerstands (R4) mit dem Positiven der Batterie (66) verbunden ist, das andere Ende des ersten Teiler-Widerstands (R4) mit einem Ende des zweiten Teiler-Widerstands (R5) und einem PWM2-Kontakt des Mikrocontrollers (U1) verbunden ist, das andere Ende des zweiten Teiler-Widerstands (R5) geerdet ist.

8. USB-Ladegerät mit Anzeige einer elektrischen Größe für eine Batterie, welche geladen wird, nach Anspruch 1, **dadurch gekennzeichnet, dass**, wenn die Spannung der Batterie, welche geladen wird, indirekt getestet wird, ein Typ des Mikrocontrollers (U1') SN8P2712 ist.

9. USB-Ladegerät mit Anzeige einer elektrischen Größe für eine Batterie, welche geladen wird, nach Anspruch 8, **dadurch gekennzeichnet, dass**, wenn die Spannung der Batterie, welche geladen wird, indirekt getestet wird, die einstellbare Ausgabe-Gleichstrom-Gleichstrom-Schaltung einen MOSFET (Q1), einen ersten Kondensator (C1'), eine erste schnelle Freilaufdiode (D1'), einen ersten Widerstand (R1') und einen zweiten Widerstand (R2') umfasst;
eine Source des MOSFET (Q1) mit dem Negativen der ersten schnellen Freilaufdiode (D1'), das Positive der ersten schnellen Freilaufdiode (Q1) mit der USB-Schnittstelle (P1') über den ersten Widerstand (R1') verbunden ist;
ein Gate des NOSFET (Q1) mit dem Kontakt PWM0 des Mikrocontrollers (U1') über den zweiten Widerstand (R2') verbunden ist;
ein Drain des MOSFET (Q1) mit einem Ende des ersten Kondensators (C1') und der Linear-Lade-Managementschaltung (77) verbunden ist, das andere Ende des ersten Kondensators (C1') mit dem Negativen der Batterie (88) verbunden ist.

10. USB-Ladegerät mit Anzeige einer elektrischen Größe für eine Batterie, welche geladen wird, nach Anspruch 9, **dadurch gekennzeichnet, dass**, wenn die Spannung der Batterie, welche geladen wird, indirekt getestet wird, der MOSFET (Q1) P-Kanal ist und ein Typ des MOSFET (Q1) AO3401 ist.

11. USB-Ladegerät mit Anzeige einer elektrischen Größe für eine Batterie, welche geladen wird, nach Anspruch 10, **dadurch gekennzeichnet, dass**, wenn die Spannung der Batterie, welche geladen wird, indirekt getestet wird, die Abtastspannung-Schaltung (80) einen ersten Teiler-Widerstand (R4') und einen zweiten Teiler-Widerstand (R5') umfasst, ein Ende des ersten Teiler-Widerstands (R4') mit einem Ende des ersten Kondensators (C1') verbunden ist, das andere Ende des ersten Teiler-Widerstands (R4') mit einem Ende des zweiten Teiler-Widerstands (R5') und einem PWM2-Kontakt des Mikrocontrollers (U1') verbunden ist, das andere Ende des zweiten Teiler-Widerstands (R5') geerdet ist.

12. USB-Ladegerät mit Anzeige einer elektrischen Größe für eine Batterie, welche geladen wird, nach Anspruch 8, **dadurch gekennzeichnet, dass**, wenn die Spannung der Batterie, welche geladen wird, indirekt getestet wird, die Abtaststrom-Schaltung (70) einen Abtaststrom-Widerstand (R6') umfasst, welcher separat mit einem PWM1-Kontakt des Mikrocontrollers (U1') und dem Negativen der Batterie (88) verbunden ist.

13. Verfahren für eine Anzeige einer elektrischen Größe eines USB-Ladegeräts mit Anzeige einer elektrischen Größe einer Batterie, welche geladen wird, **dadurch gekennzeichnet, dass** eine Laderegelungs-/Ladesteuerungseinheit (200) eine externe Leistungszufuhr regelt/steuert, um die Batterie in einer Batterieeinheit (100) zu laden, direkt oder indirekt eine Spannung der Batterie, welche geladen wird, in der Batterieeinheit (100) testet und ferner eine Anzeigeeinheit (300) einer elektrischen Größe regelt/steuert, um eine elektrische Größe der Batterie, welche geladen wird, anzuzeigen;
wenn die Spannung der Batterie, welche geladen wird, direkt getestet wird, ein Mikrocontroller (20) eine Ladespannung regelt/steuert, welche zu der Batterie (66) von der Lade-Managementschaltung (30) ausgegeben wird, und ferner eine Abtastspannung-Schaltung regelt/steuert, um die Spannung der Batterie (66), welche geladen wird, zu detektieren und die Anzeigeeinheit (300) einer elektrischen Größe regelt/steuert, um die elektrische Größe anzuzeigen;
wenn eine Spannung der Batterie, welche geladen wird, indirekt getestet wird, der Mikrocontroller (50) eine Ladespannung, welche zu der Batterieeinheit (100) von einer einstellbaren Ausgabe-Gleichstrom-Gleichstrom-Schaltung (60) ausgegeben wird, regelt/steuert, und eine Abtaststrom-Schaltung (70) regelt/steuert, um einen gegenwärtigen Ladestrom der Batterie (88) zu detektieren, und somit die einstellbare Ausgabe-Gleichstrom-Gleichstrom-Schaltung (60) regelt/steuert, um eine eingestellte Ladespannung zu der Batterieeinheit (100) auszugeben, um sicherzustellen, dass der gegenwärtige Ladestrom der Batterie gleich groß ist wie oder etwas geringer ist als ein voreingestellter konstanter Ladestrom der Batterie; und dann die Abtastspannung-Schaltung (80) regelt/steuert, um die eingestellte Ladespannung zu detektieren;
die Spannung der Batterie (88), welche geladen wird, gleich zu derjenigen der Ladespannung abzüglich einer voreingestellten Differenz ist; der Mikrocontroller ferner die Anzeigeeinheit (300) einer elektrischen Größe regelt/steuert, um die elektrische Größe anzuzeigen.

## Revendications

1. Chargeur USB avec affichage de quantité d'électricité pour batterie en cours de chargement, comprenant :
une interface USB (400) ;
une unité de batterie (100) ; et
une unité de commande de charge (200) ;
dans lequel le chargeur USB comprend en outre une unité d'affichage de quantité d'électricité (300) ;
**caractérisé en ce que** l'unité de commande de charge (200) est reliée séparément à l'interface USB (400), à l'unité de batterie (100) et à l'unité d'affichage de quantité d'électricité (300) ;
l'unité de commande de charge (200) commande une alimentation externe chargeant une batterie dans l'unité de batterie (100) par l'intermédiaire de l'interface USB (400), teste la tension de la batterie en cours de chargement directement ou indirectement, et commande en outre l'unité d'affichage de quantité d'électricité (300) afin qu'elle présente la quantité d'électricité mise à jour de la batterie en cours de chargement en temps réel ;
lorsque la tension de la batterie en cours de chargement est testée directement, l'unité de commande de charge (200) inclut : un microcontrôleur (20), un circuit de gestion de charge (30) et un circuit de tension d'échantillonnage (40), et l'unité de batterie (100) inclut la batterie (66) ;
l'interface USB (400) est reliée au circuit de gestion de charge (30) relié séparément à la batterie (66) et au circuit de tension d'échantillonnage (40), le circuit de tension d'échantillonnage (40) est relié au microcontrôleur (20) relié séparément au circuit de gestion de charge (30) et à l'unité d'affichage de quantité d'électricité (300) ; et
le microcontrôleur (20) commande le circuit de gestion de charge (30) fournissant en sortie une tension de charge à la batterie (66), le microcontrôleur (20) commande en outre le circuit de tension d'échantillonnage (40) détectant la tension de la batterie (66) en cours de chargement, et l'unité d'affichage de quantité d'électricité (300) présentant la quantité d'électricité de la batterie en cours de chargement ;
lorsque la tension de la batterie est testée indirectement, l'unité de commande de charge (200) inclut : un microcontrôleur (50), un circuit CC-CC de sortie réglable (60), un circuit de tension d'échantillonnage (80) et un circuit de courant d'échantillonnage (70), l'unité de batterie (100) inclut une batterie (88) et un circuit de gestion de charge linéaire (77) ;
l'interface USB (400) est reliée au circuit CC-CC de sortie réglable (60) relié séparément au circuit de gestion de charge linéaire (77) et au circuit de tension d'échantillonnage (80), le circuit de gestion de charge linéaire (77) est relié à la batterie (88) reliée au circuit de courant d'échantillonnage (70), le microcontrôleur (50) est relié séparément au circuit de tension d'échantillonnage (80), au circuit de courant d'échantillonnage (70), à l'unité CC-CC de sortie réglable (60) et à l'unité d'affichage de quantité d'électricité (300) ; et
le microcontrôleur (50) est configuré pour commander la tension de charge fournie en sortie à l'unité de batterie (100) par le circuit CC-CC de sortie réglable (60), pour commander le circuit de courant d'échantillonnage (70) afin qu'il détecte le courant de charge effectif de la batterie (88), et en outre pour commander le circuit CC-CC de sortie réglable (60) afin qu'il fournisse en sortie une tension de charge réglée à l'unité de batterie (100) afin de garantir que le courant de charge effectif de la batterie soit égal ou légèrement inférieur à un courant de charge constant prédéfini de la batterie ; le microcontrôleur (50) commande en outre le circuit de tension d'échantillonnage (80) afin qu'il détecte la tension de charge réglée, et l'unité d'affichage de quantité d'électricité (300) afin qu'elle présente la quantité d'électricité.

2. Chargeur USB avec affichage de quantité d'électricité pour batterie en cours de chargement selon la revendication 1, **caractérisé en ce que** l'unité d'affichage de quantité d'électricité inclut une lampe LED et/ou un écran LCD.

3. Chargeur USB avec affichage de quantité d'électricité pour batterie en cours de chargement selon la revendication 1, **caractérisé en ce que** la quantité d'électricité est un niveau chargé de la batterie en cours de chargement, l'unité d'affichage de quantité d'électricité inclut au moins deux lampes LED indiquant le niveau chargé.

4. Chargeur USB avec affichage de quantité d'électricité pour batterie en cours de chargement selon la revendication 1, **caractérisé en ce que** la quantité d'électricité inclut un pourcentage de quantité d'électricité pleine de la batterie en cours de chargement et le temps de charge passé et/ou le surplus de temps de charge, l'unité d'affichage de quantité d'électricité inclut au moins un écran LCD indiquant la quantité d'électricité.

5. Chargeur USB avec affichage de quantité d'électricité pour batterie en cours de chargement selon la revendication 1, **caractérisé en ce que**, lorsque la tension de la batterie en cours de chargement est testée directement, le circuit de gestion de charge inclut une puce de commande de charge (U2), un premier condensateur (C1) et une première résistance (R1), la puce de commande de charge (U2) est reliée à l'interface USB (P1) via la première résistance (R1), la puce de commande de charge (U2) est également reliée à une extrémité du premier condensateur (C1) et au positif de la batterie (66), l'autre extrémité du premier condensateur (C1) est reliée au négatif de la batterie (66).

6. Chargeur USB avec affichage de quantité d'électricité pour batterie en cours de chargement selon la revendication 5, **caractérisé en ce que**, lorsque la tension de la batterie en cours de chargement est testée directement, le type de la puce de commande de charge est VA7204, le type du microcontrôleur est SN8P2712.

7. Chargeur USB avec affichage de quantité d'électricité pour batterie en cours de chargement selon la revendication 6, **caractérisé en ce que**, lorsque la tension de la batterie en cours de chargement est testée directement, le circuit de tension d'échantillonnage (40) inclut une première résistance diviseuse (R4) et une seconde résistance diviseuse (R5), une extrémité de la première résistance diviseuse (R4) est reliée au positif de la batterie (66), l'autre extrémité de la première résistance diviseuse (R4) est reliée à une extrémité de la seconde résistance diviseuse (R5) et à la broche PWM2 du microcontrôleur (U1), l'autre extrémité de la seconde résistance diviseuse (R5) est à la terre.

8. Chargeur USB avec affichage de quantité d'électricité pour batterie en cours de chargement selon la revendication 1, **caractérisé en ce que**, lorsque la tension de la batterie en cours de chargement est testée indirectement, le type du microcontrôleur (U1') est SN8P2712.

9. Chargeur USB avec affichage de quantité d'électricité pour batterie en cours de chargement selon la revendication 8, **caractérisé en ce que**, lorsque la tension de la batterie en cours de chargement est testée indirectement, le circuit CC-CC de sortie réglable inclut un MOSFET (Q1), un premier condensateur (C1'), une première diode à récupération rapide (D1'), une première résistance (R1') et une seconde résistance (R2') ;
une source du MOSFET (Q1) est reliée au négatif de la première diode à récupération rapide (D1'), le positif de la première diode à récupération rapide (Q1) est relié à l'interface USB (P1') via la première résistance (R1') ;
une grille du NOSFET (Q1) est reliée à la broche PWM0 du microcontrôleur (U1') via la seconde résistance (R2') ;
un drain du MOSFET (Q1) est relié à une extrémité du premier condensateur (C1') et au circuit de gestion de charge linéaire (77), l'autre extrémité du premier condensateur (C1') est reliée au négatif de la batterie (88).

10. Chargeur USB avec affichage de quantité d'électricité pour batterie en cours de chargement selon la revendication 9, **caractérisé en ce que**, lorsque la tension de la batterie en cours de chargement est testée indirectement, le MOSFET (Q1) est à canal P et le type du MOSFET (Q1) est AO3401.

11. Chargeur USB avec affichage de quantité d'électricité pour batterie en cours de chargement selon la revendication 10, **caractérisé en ce que**, lorsque la tension de la batterie en cours de chargement est testée indirectement, le circuit de tension d'échantillonnage (80) inclut une première résistance diviseuse (R4') et une seconde résistance diviseuse (R5'), une extrémité de la première résistance diviseuse (R4') est reliée à une extrémité du premier condensateur (C1'), l'autre extrémité de la première résistance diviseuse (R4') est reliée à une extrémité de la seconde résistance diviseuse (R5') et à la broche PWM2 du microcontrôleur (U1'), l'autre extrémité de la seconde résistance diviseuse (R5') est à la terre.

12. Chargeur USB avec affichage de quantité d'électricité pour batterie en cours de chargement selon la revendication 8, **caractérisé en ce que**, lorsque la tension de la batterie en cours de chargement est testée indirectement, le circuit de courant d'échantillonnage (70) inclut une résistance de courant d'échantillonnage (R6') qui est reliée séparément à la broche PWM1 du microcontrôleur (U1') et au négatif de la batterie (88).

13. Procédé pour afficher une quantité d'électricité d'un chargeur USB avec affichage de quantité d'électricité d'une batterie en cours de chargement, **caractérisé en ce qu'**une unité de commande de charge (200) commande une alimentation externe afin qu'elle charge la batterie dans une unité de batterie (100), teste directement ou indirectement la tension de la batterie en cours de chargement dans l'unité de batterie (100), et commande en outre une unité d'affichage de quantité d'électricité (300) afin qu'elle présente la quantité d'électricité de la batterie en cours de chargement ;
lors d'un test direct de la tension de la batterie en cours de chargement, un microcontrôleur commande (20) la tension de charge fournie en sortie à la batterie (66) par le circuit de gestion de charge (30), et commande en outre un circuit de tension d'échantillonnage afin qu'il détecte la tension de la batterie (66) en cours de chargement, et commande l'unité d'affichage de quantité d'électricité (300) afin qu'elle présente la quantité d'électricité ;
lors d'un test indirect de la tension de la batterie en cours de chargement, le microcontrôleur (50) commande la tension de charge fournie en sortie à l'unité de batterie (100) par un circuit CC-CC de sortie réglable (60), et commande un circuit de courant d'échantillonnage (70) afin qu'il détecte le courant de charge effectif de la batterie (88), et commande ainsi le circuit CC-CC de sortie réglable (60) afin qu'il fournisse en sortie une tension de charge réglée à l'unité de batterie (100) afin de garantir que le courant de charge effectif de la batterie soit égal ou légèrement inférieur à un courant de charge constant prédéfini de la batterie, puis commande le circuit de tension d'échantillonnage (80) afin qu'il détecte la tension de charge réglée ;
la tension de la batterie (88) en cours de chargement est égale à celle de la tension de charge moins une différence prédéfinie ; le microcontrôleur commande en outre l'unité d'affichage de quantité d'électricité (300) afin de présenter la quantité d'électricité.
